# EUROPÄISCHE PATENTANMELDUNG

(11) **EP 1 988 139 A1**
(43) Veröffentlichungstag der Anmeldung: **05.11.2008**
(21) Anmeldenummer: 08012156.9
(22) Anmeldetag: 09.06.2005
(51) Int. Cl.: C09J 7/02, B32B 5/18, B32B 27/30, B32B 27/32

(54) **Klebeband mit einem Polyethylenschaumträger**

(30) Priorität: 25.06.2004 DE 202004009996 U
(62) Teilanmeldung aus: 05753732.6
(71) Anmelder: Henkel AG & Co. KGaA, 40589 Düsseldorf (DE); Lohmann GmbH & Co. KG, 56567 Neuwied (DE)
(72) Erfinder: Lewin, Anke, 40215 Düsseldorf (DE); Domanski, Reinhold, 56566 Neuwied (DE); Klauck, Wolfgang, 40670 Meerbusch (DE)

(57) **Zusammenfassung**

Klebeband, umfassend einen Träger mit einer ersten Seite und einer zweiten Seite, dadurch gekennzeichnet, dass der Träger ein befilmtes Band aus einem geschlossenzelligen Schaum aus Polyethylen oder einem Ethylen-Vinylacetat-Copolymer ist und dass die erste und die zweite Seite jeweils mindestens zwei Segmente aufweisen, die mit unterschiedlichen Klebstoffen beschichtet sind, von denen mindestens ein erster Klebstoff eine hohe Anfangsklebkraft und mindestens ein zweiter Klebstoff eine hohe Endklebkraft aufweisen.

## Beschreibung

Die Erfindung betrifft ein Klebeband, das einen Träger mit einer ersten und einer zweiten Seite umfaßt.

Klebebänder sind in einer großen Vielzahl von Formen bekannt und im Markt erhältlich. Sie bestehen in der Regel aus einem Träger aus einer relativ dünnen flexiblen Kunststofffolie, die mit einem Klebstoff beschichtet ist. Typische Trägermaterialien sind Polypropylen, Polyethylen, Polyethylenterephthalat, Polyvinylchlorid und Acetat-Folie sowie Gewebeträger und Schaumträgermaterialien. Klebebänder werden zum Verbinden oder Bündeln von Gegenständen, zum Abdichten oder beispielsweise bei Anstricharbeiten zum Maskieren, d. h. zum Abdecken von Bereichen, die nicht mit Anstrichmittel bedeckt werden sollen, verwendet.

Der Träger von Klebebändern kann einseitig oder beidseitig mit Klebstoff beschichtet sein. Beidseitig mit Klebstoff beschichtete Klebebänder werden auch als Montagebänder bezeichnet und werden dazu verwendet, Gegenstände mit mindestens einer ebenen Seite auf einem ebenen Untergrund zu befestigen. Mit ihnen können beispielsweise Bilder, Spiegel oder Schilder an einer Wand befestigt werden.

Die Klebstoffe zur Herstellung von Klebebändern können aus einer großen Vielzahl gebräuchlicher Materialien ausgewählt werden. Es kann sich z. B. um SIS-Kautschuke, SBS-Kautschuke, Polyisobutylene, Polyisoprene, Polyacrylate und Naturkautschuke, gegebenenfalls unter Zumischung klebrigmachender natürlicher und/oder synthetischer Harze handeln. Aufgrund ihrer unterschiedlichen chemischen Zusammensetzung weisen die verschiedenen Klebstoffe naturgemäß unterschiedliche Eigenschaften auf. Wesentliche Qualitätsmerkmale eines Montageklebebandes sind Anfangshaftung, Klebkraft zum Substrat, Kohäsion des Klebstoffes, Wärmestandfestigkeit und Endfestigkeit. Wichtig ist es, das Montageband bei der Klebebandanwendung gut auf den jeweiligen Untergrund anzudrücken, um eine gute Benetzung des Bandes zum Untergrund zu gewährleisten. Das Band erreicht seine Endfestigkeit, wenn die maximal mögliche Benetzung des Klebstoffes zum Untergrund erreicht wurde. Um in die mikroskopischen Oberflächenunebenheiten hineinzufließen, benötigt der Haftklebstoff in der Regel einige Zeit. Begünstigt wird der Vorgang dabei durch höhere Temperaturen sowie eine starke Andrückkraft. Klebstoffe, die eine hohe Endfestigkeit und eine hohe Wärmestandfestigkeit erzielen, benötigen im allgemeinen relativ lange, um diesen Benetzungsvorgang durchzuführen. Andererseits gibt es Klebstoffe, die eine hohe Klebrigkeit aufweisen und relativ fließfähig sind: diese Klebstoffe benetzen das Klebsubstrat deutlich schneller und haften daher auch schneller auf dem jeweiligen Untergrund. Diese Klebstoffe erreichen jedoch im allgemeinen keine hohen Endfestigkeiten und Wärmestandfestigkeiten.

Es ist Aufgabe der vorliegenden Erfindung, ein Klebeband anzugeben, dass einerseits unmittelbar nach seiner Anwendung zu einer relativ hoch belastbaren Verbindung führt und nach einiger Zeit zu einer sehr hoch belastbaren Verbindung führt und andererseits zur Verbindung von Gegenständen geeignet ist, die geringfügige Oberflächenunebenheiten aufweisen.

Diese Aufgabe wird bei einem Klebeband der eingangs genannten Art dadurch gelöst, dass der Träger ein befilmtes Band aus einem geschlossenzelligen Schaum aus Polyethylen oder einem Ethylen-Vinylacetat-Copolymer ist und dass die erste und die zweite Seite jeweils mindestens zwei Segmente aufweisen, die mit unterschiedlichen Klebstoffen beschichtet sind, von denen mindestens ein erster Klebstoff eine hohe Anfangsklebkraft und mindestens ein zweiter Klebstoff eine hohe Endklebkraft aufweisen.

Ein Klebeband, bei dem auf einer Seite unterschiedliche Klebstoffe aneinander angrenzende Segmente des Trägers bedecken, ist grundsätzlich aus der Patentanmeldung US 2002/0108564 A1 bekannt. Die erfindungswesentliche Kombination mit einem befilmten Polyethylenschaumband, die zu besonders leistungsfähigen Montagebändern führt, wird in der genannten Patentanmeldung jedoch nicht offenbart.

Das befilmte Polyethylenschaumband weist einen porigen Kern und auf beiden Seiten eine geschlossenporige glatte Oberfläche auf.

Vorteilhaft sind die Segmente, die die unterschiedlichen Klebstoffe tragen, als nebeneinander angeordnete Streifen ausgebildet, die in Längsrichtung des Klebebandes verlaufen. Ein solches Band läßt sich leicht herstellen durch streifenförmigen Auftrag der Klebstoffe auf den Träger, und es bietet auch erhebliche Vorteile bei seiner Anwendung.

Auf jeder Seite des Klebebandes können mehrere Klebstoffe miteinander kombiniert werden, die streifenförmig nebeneinander angeordnet sind, wobei die Zahl der streifenförmigen Segmente nicht begrenzt ist. Besonders vorteilhaft ist es jedoch, dass bei dem erfindungsgemäßen Klebeband auf jeder Seite des Trägers ein erstes streifenförmiges Segment mit einem Klebstoff mit hoher Anfangsklebkraft beschichtet ist und zwei weitere streifenförmige Segmente, die an die Längsseiten des ersten streifenförmigen Segments angrenzen, mit einem Klebstoff mit hoher Endklebkraft beschichtet sind. Der Klebstoffstreifen mit hoher Anfangsklebkraft verläuft also in der Mitte des Bandes, während die Klebstoffstreifen mit hoher Endklebkraft an den Rändern verlaufen. Die drei Streifen können jeweils ein Drittel der Breite des Klebebandes einnehmen, es ist aber auch möglich, die Streifenbreite zu Gunsten einer hohen Anfangsklebkraft oder zu Gunsten einer hohen Endklebkraft entsprechend zu variieren.

Das Klebeband weist vorteilhaft auf rostfreiem Stahl nach einer Minute eine Klebkraft von > 12 N/25 mm und nach 24 Stunden eine Klebkraft von > 30 N/25 mm auf, wobei die Klebkraft der nach der Prüfmethode PSTC-1 gemessenen Schälfestigkeit entspricht. Die Prüfmethode ist von dem Pressure Sensitive Tape Council entwickelt worden, einem Verband amerikanischer Klebebandhersteller. Nach den Prüfbedingungen ist die Klebkraft, die Kraft, die erforderlich ist, um einen Klebestreifen in bestimmter Breiter unter definierten Bedingungen (Abzugswinkel, Andruck, Geschwindigkeit) von einer Standardprüfplatte abzuziehen. Zur Prüfung wird ein Stück Klebeband mit einer Länger von ca. 400 mm und einer Probenbreite von 25 mm auf eine 200 mm lange, 50 mm breite und ca. 2 mm dicke rostfreie Stahlplatte aufgebracht und mittels einer 2 kg schweren gummibeschichteten Metallrolle gleichmäßig angedrückt. Von der so präparierten Stahlplatte werden ca. 25 mm Klebeband abgezogen. Die Stahlplatte wird mit einer Mitnehmerklemme in dem Prüfgerät fixiert, und das freie Bandende wird mit einer anderen Klemme befestigt. Mit einer definierten Geschwindigkeit von 300 +/- 30 mm pro Minute wird das Klebeband in einem Winkel von 180° von der Stahlplatte abgezogen, wobei das Prüfgerät die Werte der Klebkraft anzeigt. Nach Beendigung des Tests wird ein Mittelwert errechnet, der den Klebkraftwert auf Stahl darstellt. Ausgedrückt wird dieser Wert mit der Kraft (N), die für den Abzug des Klebebandes von der Stahlfläche erforderlich ist bei einer Probenbreite von 25 mm.

Besonders bevorzugt weisen die Klebstoffe und das Klebeband insgesamt folgende Eigenschaften auf:
Klebstoff mit hoher Anfangsklebkraft:
   Schälfestigkeit auf Stahl nach 1 Minute: > 40 N/25 mm
   Schälfestigkeit auf Stahl nach 24 Stunden: > 50 N/25 mm
   Temperaturbeständigkeit ≥ 50 °C
Klebstoff mit hoher Endklebkraft:
   Schälfestigkeit auf Stahl nach 1 Minute: > 15 N/25 mm
   Schälfestigkeit auf Stahl nach 24 Stunden: > 30 N/25 mm
   Temperaturbeständigkeit ≥ 100 °C
Klebeband insgesamt:
   Schälfestigkeit auf Stahl nach 1 Minute: > 12 N/25 mm
   Schälfestigkeit auf Stahl nach 24 Stunden: > 30 N/25 mm
   Temperaturbeständigkeit ≥ 95 °C

Neben der Klebkraft ist die Temperaturbeständigkeit ein weiteres Qualitätsmerkmal eines Klebebandes. Vorteilhaft weist der Klebstoff mit hoher Anfangsklebkraft eine Temperaturbeständigkeit von ≥ 70 °C und der Klebstoff mit hoher Endklebkraft eine Temperaturbeständigkeit von ≥ 100 °C auf. Der Klebstoff mit hoher Anfangsklebkraft ist vorteilhaft ein synthetischer Kautschukklebstoff, vorzugsweise ein Styrol-Isopren-Styrol-Kautschuk und der Klebstoff mit hoher Endklebkraft vorteilhaft ein Acrylatklebstoff, vorzugsweise ein Acrylatklebstoff auf 2-Ethylacrylat-Basis.

Der Träger des Klebebandes besteht vorteilhaft aus geschlossenporigem Ethlyen-Vinylactet-Copolymer. Dieser Träger ist vorteilhaft beidseitig mit einem nicht geschäumten Polyethylenfilm befilmt.

Vorteilhaft weist das Klebeband mindestens auf einer der mit Klebstoff beschichteten Seiten des Trägers eine Trennfolie auf. Eine solche Trennfolie wird auch als Releaseliner bezeichnet. Sie erleichtert die Handhabung des Klebebandes vor seiner Verwendung und ermöglicht insbesondere ein Aufrollen des Bandes verbunden mit einem leichten Abrollen für die Verwendung des Klebebandes.

Das erfindungsgemäße Klebeband kann nach im Stand der Technik gut bekannten Verfahren hergestellt werden, indem der befilmte Schaumstoffträger mittels bekannter Beschichtungsmaschinen streifenförmig mit den unterschiedlichen Klebstoffen beschichtet wird.

Im folgenden wird ein Ausführungsbeispiel der Erfindung anhand der Zeichnung näher erläutert.

Die Figur zeigt in perspektivischer Darstellung ein Klebeband gemäß der Erfindung. Dieses besteht aus einem Träger 1 aus Polyethylenschaum, der beidseitig mit einem nicht geschäumten Polyethylenfilm 8 bzw. 8' befilmt ist. Auf der ersten Seite 2 und der zweiten Seite 3 des Trägers sind mit Klebstoff beschichtete Segmente 4, 5 und 6 bzw. 4', 5' und 6' angeordnet. Hierbei sind die Segmente 5 und 5' mit einem Klebstoff mit hoher Anfangsklebkraft und die Segmente 4, 4', 6 und 6' mit einem Klebstoff mit hoher Endklebkraft beschichtet. Eine Trennfolie 7 ist auf der einen Seite des Klebebandes angeordnet.

## Patentansprüche

1. Klebeband, umfassend einen Träger mit einer ersten Seite und einer zweiten Seite, **dadurch gekennzeichnet, dass** der Träger ein befilmtes Band aus einem geschlossenzelligen Schaum aus Polyethylen oder einem Ethylen-Vinylacetat-Copolymer ist und dass die erste und die zweite Seite jeweils mindestens zwei Segmente aufweisen, die mit unterschiedlichen Klebstoffen beschichtet sind, von denen mindestens ein erster Klebstoff eine hohe Anfangsklebkraft und mindestens ein zweiter Klebstoff eine hohe Endklebkraft aufweisen.

2. Klebeband nach Anspruch 1, **dadurch gekennzeichnet, dass** die Segmente als nebeneinander angeordnete Streifen ausgebildet sind, die in Längsrichtung des Klebebandes verlaufen.

3. Klebeband nach Anspruch 2, **dadurch gekennzeichnet, dass** auf jeder Seite des Trägers ein erstes streifenförmiges Segment mit einem Klebstoff mit hoher Anfangsklebkraft beschichtet ist und zwei weitere streifenförmige Segmente, die an die Längsseiten des ersten streifenförmigen Segments angrenzen, mit einem Klebstoff mit hoher Endklebkraft beschichtet sind.

4. Klebeband nach Anspruch 1 bis 3, **dadurch gekennzeichnet, dass** es auf rostfreiem Stahl nach einer Minute eine Klebkraft von > 12 N/25 mm und nach 24 Stunden eine Klebkraft von > 30 N/25 mm aufweist, wobei die Klebkraft der nach der Prüfmethode PSTC-1 gemessenen Schälfestigkeit entspricht.

5. Klebeband nach Anspruch 1 bis 4, **dadurch gekennzeichnet, dass** der Klebstoff mit hoher Anfangsklebkraft eine Temperaturbeständigkeit von ≥ 70 °C und der Klebstoff mit hoher Endklebkraft eine Temperaturbeständigkeit von ≥ 100 °C aufweist.

6. Klebeband nach Anspruch 1 bis 5, **dadurch gekennzeichnet, dass** der Klebstoff mit hoher Anfangsklebkraft ein synthetischer Kautschukklebstoff und der Klebstoff mit hoher Endklebkraft ein Acrylatklebstoff ist.

7. Klebeband nach. Anspruch 1 bis 6, **dadurch gekennzeichnet, dass** der Träger beidseitig mit einem nicht geschäumten Polyethylenfilm befilmt ist.

8. Klebeband nach Anspruch 1 bis 7, **gekennzeichnet durch** eine Trennfolie auf mindestens einer der mit Klebstoff beschichteten Seiten des Trägers.
